# EUROPEAN PATENT APPLICATION

(11) **EP 3 477 539 A2**
(43) Date of publication of application: **01.05.2019**
(21) Application number: 18180745.4
(22) Date of filing: 29.06.2018
(51) Int. Cl.: G06K 9/00, G06K 9/18, G06K 9/62

(54) **RECOGNITION SYSTEM BASED ON OPTICAL CHARACTER RECOGNITION VISION**

(30) Priority: 27.10.2017 CN 201721436975 U; 13.06.2018 WO PCT/CN2018/091151
(71) Applicant: Beijing Juntai Innovation Technology Co., Ltd, 100176 Beijing (CN)
(72) Inventor: ZHANG, Wen, Daxing Dist., Beijing 100176 (CN)
(74) Representative: D'Halleweyn, Nele Veerle Trees Gertrudis

(57) **Abstract**

A recognition system based on OCR vision includes: a position sensor (2), an OCR vision system (3) and a control system. The position sensor (2) is configured to be triggered when detecting a product to be processed (6); the OCR vision system (3) is configured to capture an image of the product to be processed (6) and recognize an identification code provided on the product to be processed (6) when the position sensor (2) is triggered, and send the recognized identification code to the control system; the control system is configured to control to stop transporting the product to be processed (6) when the position sensor (2) is triggered, and control to continue transporting the product to be processed (6) after receiving the identification code.

## Description

### Technical Field

The present disclosure relates to, but is not limited to, the field of electronic control, and more particularly to a recognition system based on Optical Character Recognition (OCR) vision.

### Background

A traditional recognition recording manner for products to be processed is to mark and record manually. Due to a large amount of manual work, the error rate is high. To address this problem, in the related art, a bar code or two-dimensional code is stuck on the product to be processed, and then information about the product to be processed is recorded by a staff by using a bar code scanner. In this way, however, there are still a large amount of manual operations, the automatic degree is low, and the correct rate still cannot be guaranteed.

### Summary

The following is a brief introduction for the subject set forth in the present disclosure. The brief introduction is not intended to limit the protection scope of claims.

The present disclosure provides a recognition system based on Optical Character Recognition (OCR) vision, which can improve the automation degree and information recording correct rate.

The present disclosure provides a solution as follows:
A recognition system based on OCR vision includes:
a position sensor, an OCR vision system and a control system; and
the position sensor is configured to be triggered when detecting a product to be processed;
the OCR vision system is configured to capture an image of the product to be processed and recognize an identification code provided on the product to be processed when the position sensor is triggered, and send the recognized identification code to the control system;
the control system is configured to control to stop transporting the product to be processed when the position sensor is triggered, and control to continue transporting the product to be processed after receiving the identification code.

In an exemplary embodiment, the recognition system based on OCR vision further includes:
an automatic line configured to transport the product to be processed;
the position sensor is arranged on the automatic line, and located on a path along which the product to be processed is transported;
the control system includes: an upper computer system and a controller for the automatic line;
the controller for the automatic line is configured to control the automatic line to stop transporting the product to be processed when the position sensor is triggered; and control the automatic line to continue transporting the product to be processed after the upper computer system receives the identification code sent by the OCR vision system.

In an exemplary embodiment, the recognition system based on OCR vision further includes:
a code engraving device connected with the upper computer system and configured to engrave the identification code on the product to be processed; and
the upper computer system is configured to generate a unique identification code for each product to be processed, and send the unique identification code to the code engraving device, and the code engraving device is configured to engrave a corresponding identification code on the each product to be processed.

In an exemplary embodiment, the code engraving device is a carving device, and the identification code is a character code carved on the product to be processed.

In an exemplary embodiment, the character code is located on two sides of the product to be processed which is near a side edge of the automatic line, or at two opposite corners of the product to be processed.

In an exemplary embodiment, the OCR vision system is located at one side of the automatic line.

In an exemplary embodiment, the OCR vision system includes:
a camera and a processor, and the processor is connected with the camera and the upper computer system, respectively;
the camera is configured to send the captured image to the processor, and the processor is configured to recognize the identification code from the image, and then send the identification code to the upper computer system.

In an exemplary embodiment, the OCR vision system further includes:
a storage connected with the processor and configured to store the identification code; and
the camera is configured to take photos for one same product to be processed for multiple times and send the photos to the processor, and the processor is configured to store a plurality of recognized identification codes into the storage respectively, and package the plurality of stored identification codes to send to the upper computer system; and
the upper computer system is configured to, after receiving the plurality of identification codes, compare the plurality of received identification codes to acquire an accurate identification code.

In an exemplary embodiment, the upper computer system is a Manufacturing Execution System.

In an exemplary embodiment, the position sensor is a contact-type position sensor or a non-contact-type position sensor.

In an exemplary embodiment, the recognition system based on OCR vision further includes:
an alarm connected with the upper computer system; and the upper computer system is configured to control the alarm to generate an alarm when the position sensor is triggered and no identification code is received.

With the recognition system based on OCR vision provided by the present disclose, since the product to be processed is transported till the position sensor is triggered, and when the position sensor is triggered, the OCR vision system captures an image of the product to be processed provided with an identification code and recognizes the identification code, the recognized identification code can be automatically sent to the upper computer system, and the upper computer system controls to continue transporting the product to be processed after receiving the identification code. Therefore, the automatic information recording and automatic production are achieved, and it facilitates improve information recording correct rate and production efficiency.

The recognition system based on OCR vision provided by the present disclosure may further include: a code engraving device connected with the upper computer system. The code engraving device is configured to engrave the identification code on the product to be processed. Since the upper computer system generates a unique identification code for each product to be processed, and sends the unique identification code to the code engraving device, and the code engraving device engraves a corresponding identification code on the each product to be processed, the generation, recognition and recording of the identification codes of the products to be processed are completed in a complete automatic system, thereby improving information recording correct rate and production efficiency.

According to the recognition system based on OCR vision provided by the present disclosure, the code engraving device may be a carving device, and the identification code may be a character code carved on the product to be processed. For a solar production line and the like, a film is usually deposited on the surface of the product to be processed, such as a dielectric film or a metal film or the like, the common two-dimension code label will be covered such that the common two-dimension code label cannot be recognized. Whereas, the identification code in the present disclosure may be a character code carved on the product to be processed, and even a metal film is deposited on the character code, the character code still can be recognized clearly.

According to the recognition system based on OCR vision provided by the present disclosure, the character code is located on two sides of the product to be processed which is near a side edge of the automatic line, or at two opposite corners of the product to be processed. Therefore, the case that the image of the character code cannot be acquired due to the reverse placement of the product to be processed in the automatic line can be effectively prevented, and the OCR vision system may only be provided at one side of the automatic line.

With the recognition system based on OCR vision provided by the present disclosure, photos of an identical product to be processed, such as a support board and/or an assembly, can be taken for multiple times through the OCR vision system to acquire an accurate identification code.

The recognition system based on OCR vision provided by the present disclosure may further include an alarm connected with the upper computer system; and the upper computer system is configured to control the alarm to give an alarm when the position sensor is triggered and no identification code is received, thereby the abnormality of the production line can be discovered and an alarm can be given in time.

Other aspects may be understood after reading the drawings and the detailed description.

### Brief Description of Drawings

FIG. 1 is a structural diagram of an embodiment of a recognition system based on OCR vision provided by the present disclosure.
FIG. 2 is an arrangement diagram of an embodiment of a recognition system based on OCR vision provided by the present disclosure.

In the drawings:

| | | | |
|---|---|---|---|
| 1 | Automatic line | 5 | Controller for automatic line |
| 2 | Position sensor | 6 | Product to be processed |
| 3 | OCR vision system | 7 | Code engraving device |
| 4 | Upper computer system | 8 | Alarm |

### Detailed Description

A solution of the present disclosure will be described below in detail with reference to the accompanying drawings and embodiments. The detailed embodiments herein are just used to explain the solution provided by the present disclosure, but not to limit the protection scope of the present disclosure.

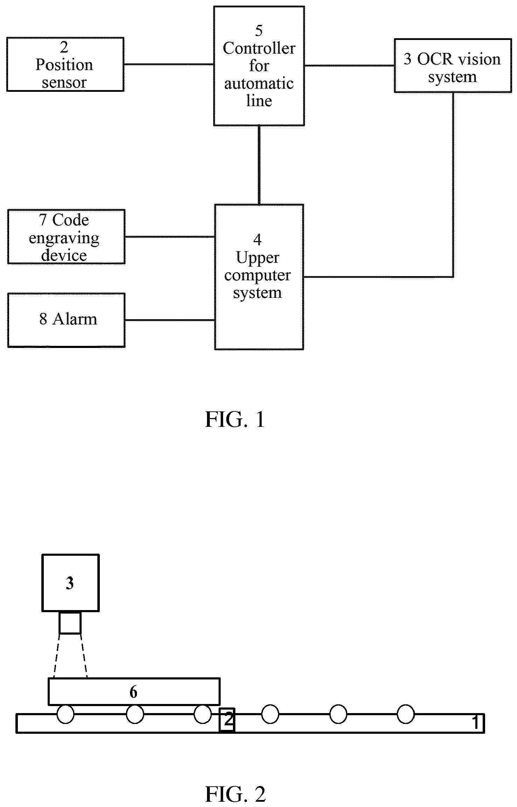

FIG. 1 shows a structural diagram of an embodiment of a recognition system based on OCR vision provided by the present disclosure. FIG. 2 shows an arrangement diagram of an embodiment of a recognition system based on OCR vision provided by the present disclosure.

In an embodiment of the present disclosure, a recognition system based on OCR vision may include:
a position sensor 2, an OCR vision system 3 and a control system.

The position sensor 2 is configured to be triggered when detecting a product to be processed 6.

The OCR vision system 3 is configured to capture an image of the product to be processed 6 and recognize an identification code provided on the product to be processed 6 when the position sensor 2 is triggered, and send the recognized identification code to the control system.

The control system is configured to control to stop transporting the product to be processed 6 when the position sensor 2 is triggered, and control to continue transporting the product to be processed 6 after receiving the identification code.

In the embodiment, the product to be processed 6 is provided with an identification code, and the vision field of the OCR vision system 3 can cover the position of the identification code when the product to be processed 6 triggers the position sensor 2.

The OCR vision may adopt a vision detection technology or a vision recognition technology or the like using an OCR technique.

The position sensor is also called a location sensor, and may be of a contact-type or a non-contact- type.

The product to be processed will be detected when the product to be processed reach a certain position, that is, the position senor will be triggered, or the position sensor will be caused to send a trigger signal.

The recognition system based on OCR vision may further include:
an automatic line 1 configured to transport the product to be processed 6; and
the position sensor 2 is arranged at the automatic line 1, and is located on a path along which the product to be processed 6 is transported.

The control system may include: an upper computer system 4 and a controller 5 for the automatic line.

The controller 5 for the automatic line is configured to control the automatic line 1 to stop transporting the product to be processed 6 when the position sensor 2 is triggered; and control the automatic line 1 to continue transporting the product to be processed 6 after the upper computer system 4 receives the identification code sent by the OCR vision system 3.

In other words, the controller 5 for the automatic line may control the transportation of the product to be processed 6 with the automatic line 1, and the controller 5 for the automatic line and the OCR vision system 3 may connect with the upper computer system 4, respectively, and the controller 5 for the automatic line may further connect with the OCR vision system 3 and the position sensor 2, respectively.

In an embodiment, the recognition system based on OCR vision may include: an automatic line 1, a position sensor 2, an OCR vision system 3 and an upper computer system 4. The controller 5 for the automatic line and the OCR vision system 3 may connect with the upper computer system 4, respectively, and the controller 5 for the automatic line may further connect with the OCR vision system 3 and the position sensor 2, respectively. The product to be processed 6 is provided with an identification code, and the vision field of the OCR vision system 3 covers the position of the identification code when the product to be processed 6 triggers the position sensor 2.

The automatic line 1 transports the product to be processed 6 till the position sensor 2 is triggered. When the position sensor 2 is triggered, the OCR vision system 3 captures an image and recognizes an identification code, and sends the recognized identification code to the upper computer system 4, and the upper computer system 4 controls the automatic line 1 to continue transporting the product to be processed 6 after receiving the identification code.

The identification code may be a bar code, a two-dimensional code or a character code or the like. The identification code may be provided at the product to be processed 6 as a label, mimeograph, laser printing or engraving or the like.

The product to be processed 6 may be a semi-finished product, such as a support board, an assembly or the like, or may be a finished product of a solar cell panel, which is not limited herein.

The automatic line 1 may include a transport device and so on. According to an instruction of the upper computer system 4, the controller 5 for the automatic line may control whether to transport the product to be processed 6 by the transport device. The upper computer system 4 may be a system installed on the upper computer, for example, a Manufacturing Execution System (MES), a warehouse management system or the like. Herein, the upper computer may be a computer which can directly send out a control instruction.

The OCR vision system 3 may include: a camera and a processor. The processor is connected with the camera and the upper computer system 4, respectively. The camera sends captured images to the processor, and the processor recognizes the identification code from the images, and then sends the identification code to the upper computer system 4. To improve the correct rate of recognizing identification codes, the OCR vision system 3 may further include a storage connected with the processor and configured to store the identification codes; the camera takes photos for the same product to be processed 6 for multiple times and sends the photos to the processor; the processor stores multiple recognized identification codes into the storage respectively, and packages the multiple stored identification codes to send to the upper computer system 4. The upper computer system compares the multiple identification codes to acquire an accurate identification code after receiving the multiple identification codes. Comparison of the multiple identification results of the OCR vision system 3 is helpful to acquire an accurate identification code.

The OCR vision system 3 and/or the controller 5 for the automatic line may connect with the upper computer system 4 by a communication manner such as a bus or the like. The OCR vision system 3 may be arranged around the automatic line 1 or above the automatic line 1 to take photos. In an exemplary embodiment, the OCR vision system 3 performs data communication with the upper computer system 4 via a communication manner such as Ethernet, serial port, PROFIBUS or CC-Link or the like. Thereby, the OCR vision system 3 can perform information communication with the upper computer system 4 using the identification code of the product to be processed 6 to track the state information of the product to be processed 6 in real time. The product to be processed 6 is transported on the automatic line 1 till the product to be processed 6 triggers the position sensor 2 and the transportation is stopped. And the OCR vision system 3 starts to take photos and recognizes the identification code when the position sensor 2 is triggered by the product to be processed 6.

In another embodiment, the recognition system based on OCR vision may further include a code engraving device 7 connected with the upper computer system 4. The code engraving device 7 is configured to engrave the identification code on the product to be processed 6. The upper computer system 4 generates a unique identification code for each product to be processed 6, and sends the identification code to the code engraving device 7. The code engraving device 7 engraves a corresponding identification code on the each product to be processed 6.

The code engraving device 7 may be a carving device, and the identification code may be a character code carved on the product to be processed 6. A bar code is usually stuck on a product to be processed, or the bar code or the two-dimension code may be formed on the product to be processed 6 using laser printing process; in this way, the surface of the product to be processed 6 is engraved in a relatively shallow manner. During the manufacturing process of the solar cell panel, since a metal coating process needs to be performed on the product to be processed such as a support board or assembly or the like, the bar code or the two-dimension code would be covered in the coating process such that the code cannot be recognized in latter stages. But the character code carved on the product to be processed 6 can be recognized clearly after the coating process. The character code is located on two sides of the product to be processed 6 which is near a side edge of the automatic line 1, or at two opposite corners of the product to be processed 6. The OCR vision system 3 is located at one side of the automatic line 1, and such arrangement of the character code do not need to consider the transport direction of the product to be processed such as the support board or the like. As long as the OCR vision system 3 is installed at one side of the automatic line or the production apparatus, it can be ensured that the character code of the product to be processed 6 can be acquired. The position sensor 2 may be a contact-type position sensor or a non-contact-type position sensor. The position sensor 2 may connect with the OCR vision system 3 directly, and send a position signal to the OCR vision system 3, or may send the position signal to the controller 5 for the automatic line and then the controller 5 for the automatic line controls the OCR vision system 3 to take photos, which is not limited herein.

In another embodiment, the recognition system based on OCR vision may further include an alarm 8 connected with the upper computer system 4; and the upper computer system 4 is configured to control the alarm 8 to give an alarm when the position sensor 2 is triggered and no identification code is received. For example, the alarm 8 includes any one or more of the following: an indicator lamp, a horn and a buzzer.

A recognition system based on OCR vision provided by an embodiment of the present disclosure includes a position sensor, an OCR vision system and a control system. The position sensor is configured to be triggered when detecting a product to be processed. The OCR vision system is configured to capture an image of the product to be processed and recognize an identification code provided on the product to be processed when the position sensor is triggered, and send the recognized identification code to the control system. The control system is configured to control to stop transporting the product to be processed when the position sensor is triggered, and control to continue transporting the product to be processed after receiving the identification code. Therefore, automatic information recording and automatic production can be achieved, and it facilitates improving information recording correct rate and production efficiency.

A recognition system based on OCR vision provided by an embodiment of the present disclosure includes an automatic line 1, a position sensor 2, an OCR vision system 3 and an upper computer system 4. A controller 5 for the automatic line and the OCR vision system 3 connect with the upper computer system 4, respectively, and the controller 5 for the automatic line further connects with the OCR vision system 3 and the position sensor 2, respectively. A product to be processed 6 is provided with an identification code, and the vision field of the OCR vision system 3 covers the position of the identification code when the product to be processed 6 triggers the position sensor 2. Since the automatic line 1 transports the product to be processed 6 till the position sensor 2 is triggered, and when the position sensor 2 is triggered, the OCR vision system 3 captures an image and recognizes the identification code, the recognized identification code can be automatically sent to the upper computer system 4, and the upper computer system 4 controls the automatic line 1 to transport the product to be processed 6 after receiving the identification code. Therefore, the automatic information recording and automatic production are achieved, and it facilitates improving information recording correct rate and production efficiency.

Though the solution provided by the present disclosure is described in combination with the above exemplary embodiments, the present disclosure is not limited to the above embodiments, but is limited by the claims. Those of ordinary skill in the art may modify and change the above embodiments without departing from the essence and scope of the present disclosure.

## Claims

1. A recognition system based on Optical Character Recognition, OCR, vision, comprising:
a position sensor (2), an OCR vision system (3) and a control system;
wherein the position sensor (2) is configured to be triggered when detecting a product to be processed (6);
the OCR vision system (3) is configured to capture an image of the product to be processed (6) and recognize an identification code provided on the product to be processed (6) when the position sensor (2) is triggered, and send the recognized identification code to the control system;
the control system is configured to control to stop transporting the product to be processed (6) when the position sensor (2) is triggered, and control to continue transporting the product to be processed (6) after receiving the identification code.

2. The recognition system based on OCR vision according to claim 1, further comprising:
an automatic line (1) configured to transport the product to be processed (6);
wherein the position sensor (2) is arranged on the automatic line (1), and located on a path along which the product to be processed (6) is transported;
the control system comprises: an upper computer system (4) and a controller (5) for the automatic line;
the controller (5) for the automatic line is configured to control the automatic line (1) to stop transporting the product to be processed (6) when the position sensor (2) is triggered; and control the automatic line (1) to continue transporting the product to be processed (6) after the upper computer system (4) receives the identification code sent by the OCR vision system (3).

3. The recognition system based on OCR vision according to claim 1, wherein the recognition system based on OCR vision further comprises:
a code engraving device (7) connected with the upper computer system (4) and configured to engrave the identification code on the product to be processed (6); and
the upper computer system (4) is configured to generate a unique identification code for each product to be processed (6), and send the unique identification code to the code engraving device (7), and the code engraving device (7) is configured to engrave a corresponding identification code on the each product to be processed (6).

4. The recognition system based on OCR vision according to claim 3, wherein the code engraving device (7) is a carving device, and the identification code is a character code carved on the product to be processed (6).

5. The recognition system based on OCR vision according to claim 4, wherein the character code is located on two sides of the product to be processed (6) which is near a side edge of the automatic line (1), or at two opposite corners of the product to be processed (6).

6. The recognition system based on OCR vision according to claim 5, wherein the OCR vision system (3) is located at one side of the automatic line (1).

7. The recognition system based on OCR vision according to claim 1, wherein the OCR vision system (3) comprises:
a camera and a processor, and the processor is connected with the camera and the upper computer system (4), respectively;
the camera is configured to send the captured image to the processor, and the processor is configured to recognize the identification code from the image, and then send the identification code to the upper computer system (4).

8. The recognition system based on OCR vision according to claim 7, wherein the OCR vision system (3) further comprises:
a storage connected with the processor and configured to store the identification code; and
the camera is configured to take photos for one same product to be processed (6) for a plurality of times and send the photos to the processor, and the processor is configured to store a plurality of recognized identification codes into the storage respectively, and package the plurality of stored identification codes to send to the upper computer system (4); and
the upper computer system (4) is configured to, after receiving the plurality of identification codes, compare the plurality of received identification codes to acquire an accurate identification code.

9. The recognition system based on OCR vision according to claim 1, wherein the upper computer system (4) is a Manufacturing Execution System.

10. The recognition system based on OCR vision according to any one of claims 1-9, wherein the recognition system based on OCR vision further comprises:
an alarm (8) connected with the upper computer system (4); and the upper computer system (4) is configured to control the alarm (8) to generate an alarm when the position sensor (2) is triggered and no identification code is received.
